# EUROPÄISCHE PATENTSCHRIFT

(11) **EP 2 753 479 B1**
(45) Veröffentlichungstag und Bekanntmachung des Hinweises auf die Patenterteilung: **06.07.2016**
(21) Anmeldenummer: 12743663.2
(22) Anmeldetag: 06.07.2012
(51) Int. Cl.: B60G 17/0165, B60Q 1/14, B60Q 9/00, G08G 1/16, G01S 17/48, G01S 17/89, G01S 17/93, G06K 9/00, G06T 7/00, H04N 13/02

(54) **VERFAHREN ZUR BESTIMMUNG EINER DURCHFAHRBARKEIT EINES OBJEKTS FÜR EIN FAHRZEUG MITTELS EINER 3D-KAMERA**
METHOD FOR DETERMINING WHETHER A VEHICLE CAN PASS THROUGH AN OBJECT BY MEANS OF A THREE-DIMENSIONAL CAMERA
PROCÉDÉ DE DÉTERMINATION DE LA POSSIBILITÉ DE PARCOURIR UN OBJET PAR UN VÉHICULE, À L'AIDE D'UNE CAMÉRA 3D

(30) Priorität: 07.09.2011 DE 102011113077
(43) Veröffentlichungstag der Anmeldung: 16.07.2014
(73) Patentinhaber: Conti Temic Microelectronic GmbH, 90411 Nürnberg (DE); Continental Teves AG & Co. OHG, 60488 Frankfurt (DE)
(72) Erfinder: HEGEMANN, Stefan, 88239 Wangen (DE); LÜKE, Stefan, 61191 Rosbach vor der Höhe (DE); HASSENPFLUG, Christoph, 88131 Lindau (DE)
(86) Internationale Anmeldenummer: PCT/DE2012/100203
(87) Internationale Veröffentlichungsnummer: WO 2013/034138

(56) Entgegenhaltungen:
- EP-A1- 1 892 688
- EP-A2- 1 209 485
- DE-A1- 19 743 580
- DE-A1-102009 040 170
- US-A1- 2009 121 852
- SERGIU NEDEVSCHI ET AL: "Forward collision detection using a Stereo Vision System", INTELLIGENT COMPUTER COMMUNICATION AND PROCESSING, 2008. ICCP 2008. 4TH INTERNATIONAL CONFERENCE ON, IEEE, PISCATAWAY, NJ, USA, 28 August 2008 (2008-08-28), pages 115-122, XP031346453, ISBN: 978-1-4244-2673-7

## Beschreibung

Die Erfindung betrifft ein Verfahren und eine Vorrichtung zur Bestimmung einer Durchfahrbarkeit eines Objekts für ein Fahrzeug mittels einer (räumlich auflösenden) 3D-Kamera.

Objekte, die über einer Fahrbahn verlaufen, wie z.B. Brücken, Tunnel, Schilderbrücken, werden insbesondere von Radarsensoren als Hindernis erkannt, ohne dass aus den Radardaten eine zuverlässige Einschätzung getroffen werden kann, ob das Hindernis durchfahren werden kann. Auch mittels Monokameras gestaltet sich diese Einschätzung häufig schwierig.

Die DE 10234645 B4 zeigt eine vertikale Stereokameraanordnung für ein Fahrzeug, mittels der eine Durchfahrtshöhe einer Brücke aus der Position der waagrechten Unterkante der Tunneleinfahrt und der Position einer waagrechten Kante zwischen Tunnelvorderseite und Fahrbahnniveau hinreichend exakt geschätzt werden kann. Es wird ferner angegeben, dass eine Kombination aus einer horizontalen und einer vertikalen Stereoanordnung die Erfassung und Vermessung sämtlicher horizontaler und vertikaler Infrastrukturkomponenten im Straßenverkehrt ermöglicht.

DE 10 2004 015 749 A1 zeigt ebenfalls eine Vorrichtung zur Bestimmung einer Durchfahrtsmöglichkeit für ein Fahrzeug. Vor einem Hindernis wird die Durchfahrtsbreite und/oder Durchfahrtshöhe mittels einer Sensoreinheit gemessen. Zusätzlich wird vorgeschlagen mittels eines Sensors der Sensoreinheit den Verlauf der vorausliegenden Fahrbahn zu überwachen, um gegebenenfalls eine Höhendifferenz zwischen einer ansteigenden Fahrbahn und der Position eines die Fahrbahn überspannenden Trägers bestimmen zu können.

DE 10 2009 040 170 A1 schlägt vor, eine Sensoreinheit mit z.B. einer Stereokamera einzusetzen, um eine maximale Durchfahrtshöhe und/oder eine Mindestbodenfreiheit zu ermitteln und eine Fahrwerks-Aktoreinheit derart anzusteuern, dass die maximale Durchfahrtshöhe durch die Gesamthöhe des Fahrzeugs nicht überschritten wird und die Mindestbodenfreiheit eingehalten wird, sofern dies für den zu durchfahrenden Fahrbahnbereich möglich ist.

US 2009/0121852 A1 ist als nächstliegender Stand der Technik zu sehen und zeigt ein Verfahren und eine Anordnung zur Warnung vor Hindernissen mit nicht ausreichender Durchfahrtshöhe bzw. nicht ausreichender Durchfahrtsbreite, insbesondere für Kraftfahrzeuge, wobei die Durchfahrtshöhe bzw. die Durchfahrtsbreite des Hindernisses ermittelt und an einen Fahrer Maßnahmen zu seiner Unterstützung bei oder vor Durchfahrt des Hindernisses ausgegeben werden. Vorausliegende Überkopfhindernisse bzw. vorausliegende seitliche Hindernisse werden zur Erfassung von durchfahrtsrelevanten Daten der Hindernisse abgetastet, wobei gleichzeitig die Fahrbahnoberfläche mit abgetastet wird. Die ermittelten durchfahrtsrelevanten Daten der Hindernisse werden mit durchfahrtsrelevanten Daten (Fahrzeughöhe bzw. Fahrzeugbreite) des Fahrzeugs verglichen. Es wird ein Warnsignal an den Fahrer ausgegeben, wenn die durchfahrtsrelevanten Daten des Fahrzeugs die durchfahrtsrelevanten Daten überschreiten oder mit diesen gleich sind.

Einen Ansatz zur Objekterkennung bei der Stereobilddatenverarbeitung zeigen U. Franke et al. In 6D-Vision: Fusion of Stereo and Motion for Robust Environment Perception in Proceedings of DAGM-Symposium 2005, S. 216-223. Hierbei werden Positionen und Geschwindigkeiten vieler Bildpunkte in drei Dimensionen simultan geschätzt.

Es zeigt sich, dass die Verfahren und Vorrichtungen nach dem Stand der Technik Nachteile mit sich bringen und unter Umständen fehlerhafte Einschätzungen liefern, z.B. wenn Breite und Höhe des Eintrittsbereichs nicht ausreichen, um die Durchfahrbarkeit eines Hindernisses zu gewährleisten.

Es ist Aufgabe der vorliegenden Erfindung diese Nachteile zu überwinden und eine zuverlässigere Einschätzung zu liefern, ob und wie ein Objekt durchfahren werden kann.

Die Aufgabe wird gelöst, indem mit einer 3D-Kamera mindestens ein Bild von der Umgebung des Fahrzeugs aufgenommen wird, vorzugsweise in (möglicher) Fahrtrichtung. Es wird zumindest eine Trajektorie ermittelt, auf der sich das Fahrzeug wahrscheinlich bewegen wird. Die Trajektorie kann anhand von Bilddaten der 3D-Kamera ermittelt werden, sie könnte aber auch anderweitig ermittelt werden, in jedem Fall liegen dem Verfahren Positionsmerkmale der ermittelten Trajektorie vor, die einen Abgleich mit den Bilddaten der 3D-Kamera ermöglichen.

Aus den Bilddaten der 3D-Kamera wird ermittelt, ob ein über der Trajektorie befindliches Objekt erkannt wird und ob dieses eine oder mehrere Verbindungen zum Boden aufweist. Es können auch in oder nahe der Fahrzeug-Trajektorie liegende Objekte als potenzielle Hindernisse ermittelt werden und ob sich diese Objekte über der Trajektorie verbinden. Auch über der Fahrbahn "hängende" Objekte, die im Bereich der Trajektorie keine Verbindung zum Boden haben können ermittelt werden.

Bei einem entsprechenden Objekt werden Abmessungen und Form der Fläche zwischen Objekt und Fahrbahn (im Folgenden auch als Eintrittsfläche bezeichnet) aus den Bilddaten ermittelt, die entsprechend der Trajektorie durchfahren werden soll. Eine Ermittlung der Form kann auf Objekt-, Freiraum-, Bild- und/oder Disparitätsdaten der 3D-Kamera aufsetzen und diese als Ausgangspunkt zur Bestimmung der genauen Abmessungen der Fläche nutzen.

Das Verfahren ist jedoch nicht beschränkt auf Objekte mit einer abgeschlossenen Eintrittsfläche im Bildbereich. Sofern z.B. ein über der Fahrbahn hängendes Objekt erkannt wird, das im Bildbereich keine Verbindung zum Boden aufweist, weil die Brückenpfeiler außerhalb des Sichtbereichs der 3D-Kamera liegen, wird nur die im Bild abgebildete (Teil-) Fläche zwischen hängendem Objekt und Fahrbahn vermessen und deren Form bestimmt. Dasselbe Vorgehen ist möglich, falls z.B. bei einer sehr hohen Brücke nur die seitlichen Brückenpfeiler im Bild abgebildet sind.

Eine Präzisierung der Bestimmung von Abmessungen und Form der Eintrittsfläche kann vorteilhaft durch eine Sensorfusion erfolgen, indem die Daten der 3D-Kamera mit den Daten weiterer Sensoren fusioniert werden, wie z.B. Ultraschall, Lidar, Radar etc.

Durch einen Vergleich der Abmessungen und Form der Eintrittsfläche mit denen des Fahrzeugs wird ermittelt, ob und wie das Objekt durchfahren werden kann. Es kann also auch eine genaue Durchfahrtstrajektorie oder ein Durchfahrtskorridor bestimmt werden, entlang der bzw. dem das Fahrzeug nicht mit dem Objekt kollidieren wird.

Diese Informationen können vorzugsweise dem Fahrer mitgeteilt werden. Der Fahrer kann auch bei der Einfahrt unterstützt werden oder das Fahrzeug könnte automatisch in das Objekt gesteuert werden, wenn eine Durchfahrt möglich ist. Sofern eine Durchfahrt nicht möglich ist, kann eine Warnung des Fahrers oder sogar ein Eingriff in die Fahrzeugsteuerung erfolgen.

Aufgrund der präzisen Ermittlung von Abmessungen und insbesondere der Form einer Durchfahrtsfläche, ermöglicht die Erfindung auch die Erkennung, dass ein Fahrzeug nicht durch eine Durchfahrtsform passt, obwohl die Gesamthöhe des Fahrzeugs unter der maximalen Durchfahrtshöhe des Objekts liegt. Das ist z.B. der Fall, wenn ein LKW mit eckigem Querschnitt durch einen abgerundeten Tunnel fahren will, weil die Seitenhöhen des Tunnels zu niedrig sind.

In einer vorteilhaften Ausführungsform werden zusätzlich zur Eintrittsfläche auch Abmessungen und Form des Raumes zwischen Objekt und Fahrbahnoberfläche, der durchfahren werden soll, aus den Bilddaten ermittelt oder abgeschätzt. Dies ist mittels der Bilddaten der 3D-Kamera möglich. Sofern Teile des durchfahrbaren Raumes auf den Bilddaten verdeckt sind, können die Form und die Abmessungen des tatsächlichen Raumes aus den vorhandenen Daten abgeschätzt werden.

Die Ermittlung der Fläche oder des Raumes, die oder der durchfahren werden soll, kann bevorzugt anhand einer Tiefenkarte, insbesondere einer Disparitätskarte aus den Bilddaten der 3D-Kamera erfolgen.

Aus der Tiefenkarte bzw. Disparitätskarte können vorteilhaft Kanten der Eintrittsfläche und/oder des durchfahrbaren Raumes bestimmt werden.

Alternativ können die Kanten der Eintrittsfläche mittels eines Algorithmus zur Kantenerkennung aus den Bilddaten bestimmt werden, beispielsweise mittels eine Canny- oder Sobel-Operators.

Gemäß einer vorteilhaften Weiterbildung der Erfindung können die Bestimmung von Abmessungen und Form der Eintrittsfläche bzw. des durchfahrbaren Raumes aus der Tiefenkarte kombiniert werden mit denen aus der Kantenerkennung anhand einer Intensitäts- bzw. Farbauswertung der Bildpunkte.

Abmessungen und Form der Fläche oder des Raumes, die oder der durchfahren werden soll, können bevorzugt über eine Folge mehrerer Bilder der 3D-Kamera ermittelt werden. Dadurch kann beispielsweise eine anfangs teilweise verdeckte räumliche Gestalt eines Tunnels mit fortschreitender Einfahrt in den Tunnel aktualisiert und hinsichtlich der Abmessungen vervollständigt werden.

Die Abmessungen und Form der Fläche oder des Raumes, die oder der durchfahren werden soll, können insbesondere unter Berücksichtigung der Bewegung der 3D-Kamera aufgrund der Bewegung des eigenen Fahrzeugs ermittelt werden.

Hierzu kann vorteilhaft aus den Bilddaten der 3D-Kamera eine 3D-Szenen-Rekonstruktion durchgeführt werden, beispielsweise mit der Methode des Optischen Flusses.

Vorteilhaft erfolgt eine Bestimmung der Raumpunkte des Objekts, die dem Fahrzeug bzw. der 3D-Kamera am nächsten liegen, in verschiedenen Höhensegmenten unter der Annahme, dass die Raumpunkte (z.B. bei rechteckigen Abschnitten von Eintrittsflächen senkrecht übereinander liegen.

Hierbei können bevorzugt die gemessenen Abstände in Längsund Quer-Richtung des Fahrzeugs bzw. der Trajektorie unterschiedlich gewichtet werden.

Die 3D-Kamera ist bevorzugt eine Stereokamera oder eine Photomischdetektor-Kamera bzw. PDM-Sensor.

Die Erfindung umfasst ferner eine Vorrichtung zur Bestimmung einer Durchfahrbarkeit eines Objekts für ein Fahrzeug. Die Vorrichtung umfasst eine 3D-Kamera zur Aufnahme mindestens eines Bildes von der vor dem Fahrzeug liegenden Umgebung. Außerdem umfasst die Vorrichtung Mittel zum Bestimmen mindestens einer Trajektorie, auf der sich das Fahrzeug wahrscheinlich bewegen wird. Zusätzlich sind Mittel vorgesehen zur Bestimmung aus den Bilddaten der 3D-Kamera, ob ein über der Trajektorie befindliches Objekt vorliegt und ob dieses eine oder mehrere Verbindungen zum Boden aufweist. Schließlich sind Mittel zur Bestimmung vorgesehen, ob eine Durchfahrt des Objekts möglich ist, durch Bestimmen von Abmessungen und Form der Fläche oder des Raumes zwischen Objekt und Fahrbahn aus den Bilddaten.

Im Folgenden wird die Erfindung anhand von Figuren und Ausführungsbeispielen näher erläutert.

Es zeigen:
Fig. 1 einen Tunnel, dessen Eintrittsfläche bogenförmig ist und in dem der Fahrbahnverlauf einer Kurve entspricht;
Fig. 2 eine Brücke über der Fahrbahn, auf der das eigene Fahrzeug fährt.

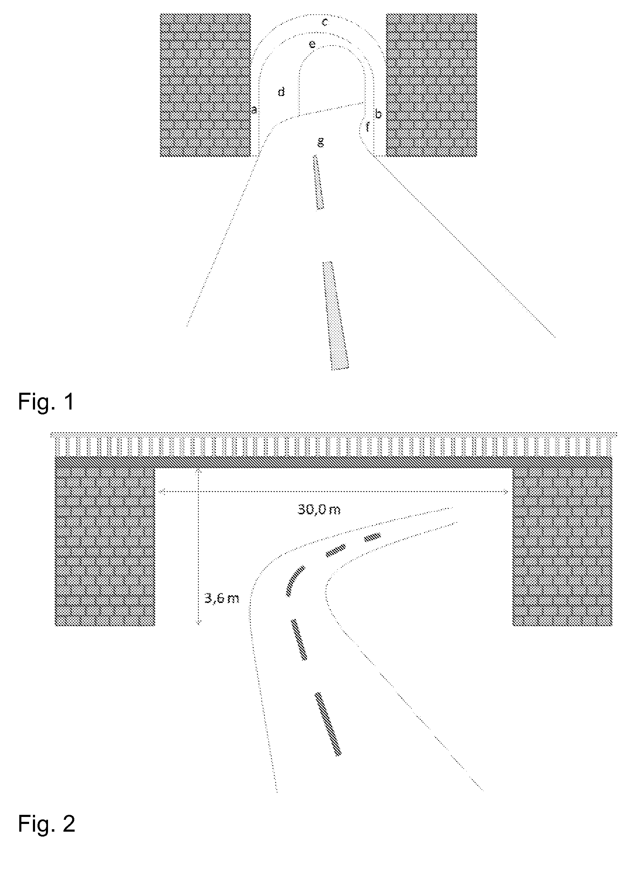

In Fig. 1 ist ein Tunnel dargestellt, der eine bogenförmige Eintrittsfläche aufweist. Dadurch hängt die maximale Durchfahrtshöhe für ein Fahrzeug von mehreren Aspekten ab:
Neben der maximalen Höhe des Fahrzeugs auch von der Form (Höhenprofil) des Fahrzeugs, von der Breite des Fahrzeugs und von der lateralen Position des Fahrzeugs im Tunnel.

Die bogenförmige Eintrittsfläche des Tunnels wird definiert vom linken (a) und rechten Rand (b) des Tunneleingangs, die beide senkrecht verlaufen und der oberen Begrenzung (c) des Tunneleingangs, die gekrümmt ist.

Der Innenraum des Tunnels, d.h. der durchfahrbare Raum, ist definiert durch den linken (d) und rechten (f) Rand des Tunnelinneren, die man als Tunnelwände bezeichnen könnte, und durch die Tunneldecke (e) (bzw. oberer Rand des Tunnelinneren). Die Fahrbahn (g) beschreibt im Tunnel eine Kurve. Daher ist der Tunnelinnenraum in Längsrichtung entsprechend gekrümmt. Die Form des Raumes (des Tunnels), die durchfahren werden soll, ist vorgegeben durch den Innenraum des Tunnels und wird nach unten durch die Fahrbahnoberfläche (g) begrenzt.

Kanten der Eintrittsfläche liegen zwischen den Rändern des Tunneleingangs (a, b, c) und den Rändern des Tunnelinneren (d, f, e). Die untere Kante der Eintrittsfläche befindet sich dort, wo die durch die zuvor beschriebenen Kanten des Tunneleingangs definierte Fläche die Fahrbahnoberfläche (g) schneidet.

Aus den Bilddaten einer 3D-Kamera können Form und Abmessungen sowohl der (Eintritts-) Fläche als auch des Raums, der durchfahren werden soll, bestimmt werden.

Durch diese Bestimmungen lassen sich beispielsweise folgende Funktionen realisieren:
- Erkennung von Brücken oder Tunneln auf der Fahrbahn
- Erkennung, dass sich das Fahrzeug aktuell in einem Tunnel befindet (Durchfahrt ist von allen Seiten begrenzt)
- Unterstützung beim Navigieren, Rangieren und Einfahren durch enge Gassen, Parkhäuser, Tore und Garagen
- Automatisiertes Einfahren in Engstellen wie z.B. Garagen, Einfahrten, Gassen, Tordurchfahrten, Brückendurchfahrten usw.
- Durch eine Vermessung der Form einer Fläche bzw. eines Raumes zwischen einem oder mehreren Objekten und der Fahrbahn können Unfälle und Beschädigungen vermieden werden. Dazu kann eine Warnung des Fahrers oder ein Eingriff in die Fahrzeugsteuerung wie z.B. automatisches Bremsen erfolgen.

In Fig. 2 ist eine Brücke dargestellt, die über der Fahrbahn verläuft, auf der das eigene Fahrzeug fährt. Nahe der Fahrbahn weist die Brücke keine Verbindung zum Boden auf. Die beiden Brückenpfeiler sind aber über der Fahrbahn verbunden. Die Durchfahrtsbreite und -höhe kann mittels einer 3D-Kamera, z.B. einer Stereokamera bestimmt werden. Wenn der Sichtbereich der Stereokamera kleiner wäre, hätte die Brücke im Sichtbereich keine Verbindung zum Boden, weil die Brückenpfeiler nicht auf dem Bild enthalten wären. In diesem Fall kann ohne Schwierigkeiten die Durchfahrtshöhe unter der Brücke aus den Bilddaten ermittelt werden.

Obwohl diese Bestimmung prinzipiell bereits nach dem Stand der Technik möglich und in der Regel ausreichend ist, kann es Situationen geben, die kritisch sind: z.B. eine lokale Bodenerhebung auf der Fahrbahn unter der Brücke, auch z.B. aufgrund eines Gegenstands auf der Fahrbahn (nicht dargestellt in Fig. 2). Dies führt zu einer lokalen Verkürzung der maximal durchfahrbaren Höhe, was zu einem Unfall führen kann. Mittels der Stereokamera kann nach einem vorliegenden Verfahren der Raum zwischen Brückenunterseite und Fahrbahn präzise vermessen werden, wodurch auch lokale Erhebungen der Fahrbahn (oder Absenkungen der Brückenunterseite) berücksichtigt werden.

## Patentansprüche

1. Verfahren zur Bestimmung einer Durchfahrbarkeit eines Objekts für ein Fahrzeug mittels einer 3D-Kamera, wobei
mit der 3D-Kamera mindestens ein Bild von der vor dem Fahrzeug liegenden Umgebung aufgenommen wird; zumindest eine Trajektorie ermittelt wird, auf der sich das Fahrzeug wahrscheinlich bewegen wird;
aus den Bilddaten der 3D-Kamera ermittelt wird:
- ob ein über der Trajektorie befindliches Objekt vorliegt und
- ob dieses eine oder mehrere Verbindung(en) zum Boden aufweist;
und daraus ermittelt wird, ob eine Durchfahrt des Objekts möglich ist, wobei Abmessungen und Form der Eintrittsfläche zwischen Objekt und Fahrbahn aus den Bilddaten ermittelt werden.

2. Verfahren nach Anspruch 1, wobei zusätzlich zur Fläche auch Abmessungen und Form des Raumes zwischen Objekt und Fahrbahnoberfläche, der durchfahren werden soll, aus den Bilddaten ermittelt oder abgeschätzt werden.

3. Verfahren nach Anspruch 1 oder 2, wobei die Ermittlung anhand einer Tiefenkarte aus den Bilddaten der 3D-Kamera erfolgt.

4. Verfahren nach Anspruch 3, wobei die Tiefenkarte eine Disparitätskarte ist.

5. Verfahren nach Anspruch 3 oder 4, wobei Kanten der Eintrittsfläche aus der Tiefenkarte bestimmt werden.

6. Verfahren nach einem der vorhergehenden Ansprüche, wobei die Kanten der Eintrittsfläche mittels eines Algorithmus zur Kantenerkennung aus den Bilddaten bestimmt werden.

7. Verfahren nach einem der vorhergehenden Ansprüche, wobei die Bestimmung von Abmessungen und Form der Eintrittsfläche aus der Tiefenkarte kombiniert wird mit denen aus der Kantenerkennung.

8. Verfahren nach einem der vorhergehenden Ansprüche, wobei Abmessungen und Form der Fläche oder des Raumes, die oder der durchfahren werden soll, über eine Folge mehrerer Bilder der 3D-Kamera ermittelt wird.

9. Verfahren nach Anspruch 8, wobei Abmessungen und Form der Fläche oder des Raumes, die oder der durchfahren werden soll, unter Berücksichtigung der Bewegung der 3D-Kamera ermittelt wird.

10. Verfahren nach Anspruch 9, wobei aus den Bilddaten der 3D-Kamera eine 3D-Szenen-Rekonstruktion durchgeführt wird.

11. Verfahren nach einem der vorhergehenden Ansprüche, wobei die 3D-Kamera eine Stereokamera ist.

12. Verfahren nach einem der Ansprüche 1 bis 10, wobei die 3D-Kamera eine Photomischdetektor-Kamera ist.

13. Vorrichtung zur Bestimmung einer Durchfahrbarkeit eines Objekts für ein Fahrzeug, umfassend eine 3D-Kamera zur Aufnahme mindestens eines Bildes von der vor dem Fahrzeug liegenden Umgebung;
Mittel zum Bestimmen mindestens einer Trajektorie, auf der sich das Fahrzeug wahrscheinlich bewegen wird; Mittel zur Bestimmung aus den Bilddaten der 3D-Kamera
- ob ein über der Trajektorie befindliches Objekt vorliegt und
- ob dieses eine oder mehrere Verbindungen zum Boden aufweist;
und Mittel zur Bestimmung, ob eine Durchfahrt des Objekts möglich ist, durch Bestimmen von Abmessungen und Form der Eintrittsfläche zwischen Objekt und Fahrbahn aus den Bilddaten.

## Claims

1. A method for determining whether a vehicle can pass through an object by means of a 3-D camera, wherein
at least one image of the surroundings ahead of the vehicle is recorded by the 3-D camera;
at least one trajectory is ascertained on which the vehicle is likely to move;
from the image data of the 3-D camera it is ascertained:
- whether an object is present which is located above the trajectory, and
- whether said object has one or more connection(s) to the ground;
and it is further ascertained whether it is possible for the vehicle to pass through the object, wherein the dimensions and shape of the entry area between the object and the roadway are ascertained from the image data.

2. The method according to Claim 1, wherein in addition to the area the dimensions and shape of the space between the object and the roadway through which the vehicle is to pass are also ascertained or estimated from the image data.

3. The method according to Claim 1 or 2, wherein the ascertainment is made using a depth map from the image data of the 3-D camera.

4. The method according to Claim 3, wherein the depth map is a disparity map.

5. The method according to Claim 3 or 4, wherein edges of the entry area are determined from the depth map.

6. The method according to any one of the preceding claims, wherein the edges of the entry area are determined from the image data by using an edge detection algorithm.

7. The method according to any one of the preceding claims,
wherein the determination of the dimensions and shape of the entry area made using the depth map is combined with a determination made using edge detection.

8. The method according to any one of the preceding claims,
wherein the dimensions and shape of the area or the space through which the vehicle is to pass are ascertained from a sequence of multiple images provided by the 3-D camera.

9. The method according to Claim 8, wherein the dimensions and shape of the area or the space through which the vehicle is to pass are ascertained, taking into account the motion of the 3-D camera.

10. The method according to Claim 9, wherein a 3-D scene reconstruction is made from the image data provided by the 3-D camera.

11. The method according to any one of the preceding claims, wherein the 3-D camera is a stereo camera.

12. The method according to any one of Claims 1 to 10, wherein the 3-D camera is a photonic mixing device camera.

13. A device for determining whether a vehicle can pass through an object, comprising a 3-D camera for recording at least one image of the surroundings ahead of the vehicle;
means for determining at least one trajectory on which the vehicle is likely to move;
means for determining from the image data of the 3-D camera
- whether an object is present which is located above the trajectory, and
- whether said object has one or more connections to the ground;
and means for determining whether it is possible for the vehicle to pass through the object by determining the dimensions and shape of the entry area between the object and the roadway from the image data.

## Revendications

1. Procédé de détermination de la possibilité de parcourir un objet pour un véhicule, à l'aide d'une caméra 3D,
dans lequel au moins une image de l'environnement situé devant le véhicule est prise avec la caméra 3D ;
au moins une trajectoire sur laquelle le véhicule va probablement se déplacer est déterminée ;
dans lequel il est déterminé à partir des données d'images de la caméra 3D :
- s'il y a un objet situé sur la trajectoire et
- si celui-ci présente une ou plusieurs liaisons avec le sol;
et à partir de cela, il est déterminé si un parcours de l'objet est possible, des dimensions et la forme de la surface d'entrée entre l'objet et la chaussée étant déterminées à partir des données d'images.

2. Procédé selon la revendication 1, dans lequel, en plus de la surface, des dimensions et la forme de l'espace entre l'objet et la surface de la chaussée qui doit être parcouru sont également déterminées à partir des données d'images ou estimées.

3. Procédé selon la revendication 1 ou 2, dans lequel la détermination s'effectue à l'aide d'une carte de profondeur à partir des données d'images de la caméra 3D.

4. Procédé selon la revendication 3, dans lequel la carte de profondeur est une carte de disparité.

5. Procédé selon la revendication 3 ou 4, dans lequel des arêtes de la surface d'entrée sont définies à partir de la carte de profondeur.

6. Procédé selon l'une des revendications précédentes, dans lequel les arêtes de la surface d'entrée sont définies au moyen d'un algorithme de détection des arêtes à partir des données d'images.

7. Procédé selon l'une des revendications précédentes, dans lequel la définition de dimensions et de la forme de la surface d'entrée à partir de la carte de profondeur est combinée avec celles issues de la détection des arêtes.

8. Procédé selon l'une des revendications précédentes, dans lequel des dimensions et la forme de la surface ou de l'espace qui doit être parcouru(e) sont déterminées par le biais d'une séquence de plusieurs images de la caméra 3D.

9. Procédé selon la revendication 8, dans lequel des dimensions et la forme de la surface ou de l'espace qui doit être parcouru(e) sont déterminées en prenant en compte le mouvement de la caméra 3D.

10. Procédé selon la revendication 9, dans lequel une reconstitution de scènes 3D est effectuée à partir des données d'images de la caméra 3D.

11. Procédé selon l'une des revendications précédentes, dans lequel la caméra 3D est une caméra stéréo.

12. Procédé selon l'une des revendications 1 à 10, dans lequel la caméra 3D est une caméra à mélangeur photo-électronique.

13. Dispositif destiné à la détermination de la possibilité de parcourir un objet pour un véhicule, comprenant une caméra 3D pour la prise d'au moins une image de l'environnement situé devant le véhicule ;
des moyens pour la définition d'au moins une trajectoire sur laquelle le véhicule va probablement se déplacer ;
des moyens pour définir, à partir des données d'images de la caméra 3D
- s'il y a un objet situé sur la trajectoire et
- si celui-ci présente une ou plusieurs liaisons avec le sol;
et des moyens pour définir si un parcours de l'objet est possible, par la détermination de dimensions et de la forme de la surface d'entrée entre l'objet et la chaussée à partir des données d'images.
